# EUROPEAN PATENT SPECIFICATION

(11) **EP 0 866 661 B1**
(45) Date of publication and mention of the grant of the patent: **14.04.2004**
(21) Application number: 96932685.9
(22) Date of filing: 26.09.1996
(51) Int. Cl.: A23J 3/04, A23L 1/314, A23K 1/10, A23K 1/18

(54) **FOODSTUFF**
NAHRUNGSMITTEL
DENREE ALIMENTAIRE

(30) Priority: 26.09.1995 GB 9519555
(43) Date of publication of application: 30.09.1998
(73) Proprietor: MARS UK LIMITED, Slough, Berkshire SL1 4LW (GB)
(72) Inventor: MUSSON, Gary, David, Melton Mowbray, Leicestershire LE13 1TA (GB); WALKER, Richard, James, Melton Mowbray, Leicestershire LE13 1PW (GB); HARFORD, Stephen, Oakha m, Leicestershire LE15 7HN (GB); SPEIRS, Charles, Ivie, Rutland, Leicestershire LE15 7HF (GB)
(74) Representative: Marlow, Nicholas Simon
(86) International application number: PCT/GB1996/002397
(87) International publication number: WO 1997/011610

(56) References cited:
- EP-A- 0 141 644
- EP-A- 0 195 555
- DD-A- 151 688
- US-A- 3 447 929
- US-A- 3 684 527
- US-A- 4 262 027
- US-A- 4 265 913
- DATABASE WPI Week 8731 Derwent Publications Ltd., London, GB; AN 87-219064 XP002023989 & JP 62 146 583 A (NAKAITA T) , 30 June 1987
- DATABASE WPI Week 8927 Derwent Publications Ltd., London, GB; AN 89-198201 XP002023990 & JP 01 137 952 A (NIPPON SUISAN KAISHA) , 30 May 1989
- DATABASE WPI Week 7736 Derwent Publications Ltd., London, GB; AN 77-64153Y XP002023991 & JP 52 090 657 A (NISSHIN FLOUR MILL KK) , 30 July 1977
- DATABASE WPI Week 8237 Derwent Publications Ltd., London, GB; AN 82-77418E XP002023992 & JP 57 125 677 A (SUISAN-CHO CHOKAN) , 5 August 1982
- DATABASE WPI Week 8932 Derwent Publications Ltd., London, GB; AN 89-233527 XP002023993 & SU 1 457 887 A (E SIB TECH INST) , 15 February 1989

## Description

The present invention relates to a novel foodstuff, and more particularly to a petfood, and to methods of making the novel foodstuff.

There are three different types of canned petfood widely available at present. The first consists of meat chunks in a thick gravy; the second consists of meat chunks in a jelly; and the third consists of meat chunks in a meat loaf or mousse.

The present invention is a novel style of canned pet food, and a method of making it. Proteinaceous foodstuffs including meat and a leavening agent are known. EP-A-0 195 555 discloses gelled chunks containing chicken and 1% sodium hydrogen carbonate for use in conventional pet food formulations. DD-A-151 688 discloses a meatloaf product containing 0.5% sodium hydrogen carbonate. US-A-4 265 913 discloses a dry dog and cat food containing meat and a leavening agent.

In accordance with the present invention, there is provided a canned foodstuff comprising discrete chunks of a gelled mixture comprising meat protein, no more than 10% by weight of the can contents being intervening liquid, gel or other matrix material, the chunks being supported by and in direct contact with neighbouring chunks, the canned foodstuff being obtainable by a method comprising:
forming a mixture of meat protein and a gelling system;
leavening the mixture while gelling it and forming it into chunks;
sealing the gelled chunks in a can with a liquid; and
heating the contents of the can so that the liquid is absorbed by the chunks leaving no more than 10% by weight of the can contents as intervening liquid, gel or other matrix material so that the chunks are supported by and in direct contact with neighbouring chunks.

The chunks typically have a sponge-like internal texture. Preferably, the gelled mixture further comprises starch.

In the can each chunk is supported by and in direct contact with neighbouring chunks. The absence of a surrounding medium enables the chunks to be emptied from the can cleanly, leaving the inside substantially free of unwanted residues. Furthermore, on removing the contents from the can, the discrete chunks are free-running and separate easily. This is quite different to petfoods with meat chunks in jelly or mousse which must be mashed, or at least broken up, to produce bite-sized pieces.

It has been established from feeding tests analysed using conventional mapping techniques that groups of one species of animal, such as cats, having common feeding preferences can be identified. Feeding tests conducted with canned foodstuffs according to the present invention indicate that some of these groups of cats show a marked preference for the foodstuffs of the present invention over conventional canned petfoods, which typically contain around 20% by weight of can contents of free liquid or gel. Preferably, the chunks comprise between 65 and 85%, preferably between 70 and 80%, by weight water.

In accordance with a second aspect of the invention there is provided a method of making a foodstuff comprising: forming a mixture of meat protein and a gelling system; leavening the mixture while gelling it and forming it into chunks; sealing the gelled chunks in a container with a liquid; and heating the contents of the container so that the liquid is absorbed by the chunks leaving no more than 10% by weight of the container contents as intervening liquid, gel or other matrix material so that the chunks are supported by and in direct contact with neighbouring chunks. Preferably, a chemical leavening agent is included in the mixture and is activated while the mixture is gelled. Alternatively, leavening may be by gas injection, fermentation and whipping.

If a chemical leavening agent is employed it is preferably added at from 0.1% to 1.5%, more preferably from 0.3% to 0.8%, by weight of meat protein.

As the mixture gels, the chemical leavening agent releases gas giving rise to an expanded product having a sponge-like texture. Preferably, the gelling system is thermally activated, although other gelling techniques may be employed by using, for example, an alginate gel. A preferred thermally activated gelling systems comprise starch or protein.

In one embodiment of the second aspect of the invention, a chemical leavening agent is activated by heat. A preferred thermally-activated chemical leavening agent for nutritional purposes is potassium hydrogen carbonate. In an alternative embodiment, the chemical leavening agent is activated by a change in pH, in which case the preferred chemical leavening agent is calcium carbonate. The change in pH may be effected by adding a slow release acid such as sodium aluminium phosphate to the mixture.

If whipping (mechanical aeration or gas injection) is employed to leaven the mixture, it is preferred that a protein stabiliser such as eggwhite or blood plasma is added to the mixture, preferably in an amount of from 1% to 5% by weight of meat protein.

In a preferred method using fermentation to leaven the mixture, yeast is blended through a mixture of meat purée and wheat flour. The mixture is allowed to stand to achieve the onset of fermentation, after which it is heat gelled and further treated, if necessary.

Chunks of the gelled mixture are sealed in a container with some liquid or gel, and the contents of the container heated so that substantially all the liquid or gel is absorbed by the chunks. Heating the container results in absorption of the liquid or gel and causes the chunks to expand. In an especially preferred arrangement the gelled mixture is cut into chunks which are then sealed in the container; the expansion effect during heating can be used to produce a sealed container filled to the brim with chunks which are pressing against each other. The amount of liquid or gel sealed into the can with the chunks can be such that after absorption of the liquid or gel there is no free liquid or gel in the can. Alternatively, the amount of liquid or gel can be such that a small amount of free liquid or gel remains in the can after absorption, there being no more than 10%, more preferably no more than 5%, and most preferably no more than 2% by weight of can contents of free liquid or gel.

In one embodiment, the gelled mixture contains at least 60% by weight water. A semi-moist product having a water content of about 30% is also envisaged. Alternatively, dehydrating the foodstuff enables the water content of the gelled mixture to be reduced to between 5 and 10% by weight. The leavened nature of the foodstuff facilitates water removal and subsequent rehydration when the foodstuff is to be used. Dehydration can be used to preserve the foodstuff for long periods.

In an especially preferred form, the leavened foodstuff has a surface texture resembling that of cooked meat, particularly a red meat. The presence of wrinkle-like features on the surface of the foodstuff gives the impression of a natural product.

The invention will be understood in greater detail from the following examples of specific embodiments thereof:

### Example 1

A foodstuff is made as follows:

A dough is formed by mixing 85g of meat purée with 15g of flour and about 0.5g of potassium hydrogen carbonate. The mixture is heated to a centre temperature of 90°C to initiate gelling and the release of carbon dioxide gas, while being shaped into a rope. The gas evolves as the mixture gels results in a leavened product. When firm, the rope is cut into bite-sized chunks. The chunks contain about 60% by weight water and, on cooling, develop a wrinkled texture reminiscent of cooked meat on surfaces exposed in the rope.

About 210g of the chunks are sealed inside a 400ml can with about 160g of water. The canned foodstuff is then retorted at 129°C for 59 minutes, thus ensuring that the meat derivatives are fully cooked. During retorting, the chunks absorb all the free liquid and expand to fill any spaces in the can. When the can is opened, the impression gained is one of a container packed full of individual chunks. On removing the contents from the can, the chunks separate easily, there being no binder between chunks. The chunks have a water content between 75 and 80 weight percent and a surface texture resembling cooked meat, and the inside of the can is free from unwanted residues.

### Example 2

An alternative foodstuff is made using 0.5g of sodium bicarbonate in place of the potassium hydrogen carbonate. 0.5g of a slow release acid, sodium aluminium phosphate, is added to the mixture so as to change the pH during gelling. As the acidity increases, the sodium bicarbonate decomposes to release carbon dioxide giving rise to a leavened product. When firm, the foodstuff is further processed in exactly the same way as in Example 1.

### Example 3

A foodstuff is made in the same way as in Example 1, except that about 190g of the chunks are sealed in the can with about 180g of water. Not all the water is absorbed by the chunks during processing. When the processed can is opened, the impression gained is of a container packed full of individual chunks with a glossy coating of gravy, having a desirable appearance.

## Claims

1. A canned foodstuff comprising discrete chunks of a gelled mixture comprising meat protein, no more than 10% by weight of the can contents being intervening liquid, gel or other matrix material, the chunks being supported by and in direct contact with neighbouring chunks, the canned foodstuff being obtainable by a method comprising:
forming a mixture of meat protein and a gelling system;
leavening the mixture while gelling it and forming it into chunks;
sealing the gelled chunks in a can with a liquid; and
heating the contents of the can so that the liquid is absorbed by the chunks leaving no more than 10% by weight of the can contents as intervening liquid, gel or other matrix material so that the chunks are supported by and in direct contact with neighbouring chunks.

2. A canned foodstuff according to claim 1 in which the chunks have a sponge-like internal texture.

3. A canned foodstuff according to any preceding claim in which at least some of the pores in the chunks contain liquid.

4. A canned petfood according to any preceding claim for which at least one group of cats having a common feeding preference for conventional cat foodstuffs shows a preference over conventional canned petfood for cats.

5. A canned foodstuff according to any preceding claim wherein the chunks are a leavened foodstuff comprising a gelled mixture comprising meat protein.

6. A canned foodstuff according to any preceding claim in which the gelled mixture further comprises starch.

7. A canned foodstuff according to any preceding claim in which the gelled mixture further comprises residue from an activated chemical leavening agent.

8. A canned foodstuff according to any preceding claim in which the gelled mixture comprises at least 5% by weight water.

9. A canned foodstuff according to claim 8 in which the gelled mixture comprises at least 30% by weight water.

10. A canned foodstuff according to claim 9 in which the gelled mixture comprises at least 60% by weight water.

11. A canned foodstuff according to any preceding claim in which the chunks comprise between 65 and 85%, preferably between 70 and 80%, by weight water.

12. A canned foodstuff according to any preceding claim having a surface texture resembling cooked meat.

13. A method of making a foodstuff comprising: forming a mixture of meat protein and a gelling system; leavening the mixture while gelling it and forming it into chunks; sealing the gelled chunks in a container with a liquid; and heating the contents of the container so that the liquid is absorbed by the chunks leaving no more than 10% by weight of the container contents as intervening liquid, gel or other matrix material so that the chunks are supported by and in direct contact with neighbouring chunks.

14. A method according to claim 13 in which the mixture is gelled by heating.

15. A method according to claim 13 or 14 in which the gelling system comprises starch.

16. A method according to claim 13, 14 or 15 which comprises forming a mixture of meat protein, a gelling system and a chemical leavening agent, and gelling the mixture while activating the chemical leavening agent.

17. A method according to claim 16 in which the chemical leavening agent is added in an amount of from 0.1% to 1.5% by weight of meat protein.

18. A method according to claim 17 in which the chemical leavening agent is added in an amount of from 0.3% to 0.8% by weight of meat protein.

19. A method according to claim 16, 17 or 18 in which the chemical leavening agent is activated by heating.

20. A method according to any of claims 16 to 19 in which the chemical leavening agent is a hydrogen carbonate of an alkali metal.

21. A method according to claim 20 in which the alkali metal is potassium.

22. A method according to any of claims 16 to 21 in which the chemical leavening agent is activated by a change in pH.

23. A method according to claim 22 in which the chemical leavening agent is calcium carbonate.

24. A method according to claim 22 or 23 in which the change in pH is effected by a slow release acid which is added to the mixture.

## Patentansprüche

1. Konserviertes Nahrungsmittel, das getrennte Stücke eines gelierten Gemischs umfasst, das Fleischprotein beinhaltet, wobei nicht mehr als 10 Gew.-% des Doseninhalts dazwischenliegende(s) Flüssigkeit, Gel oder sonstiges Matrixmaterial sind, wobei die Stücke von anderen benachbarten Stücken getragen werden und sich im direkten Kontakt mit ihnen befinden, wobei das konservierte Nahrungsmittel durch ein Verfahren erhältlich ist, das die folgenden Schritte umfasst:
Bilden eines Gemischs aus Fleischprotein und einem Geliersystem;
Gehenlassen des Gemischs, während es geliert und zu Stücken geformt wird;
Verschließen der gelierten Stücke in einer Dose mit einer Flüssigkeit; und
Erhitzen des Inhalts der Dose, damit die Flüssigkeit von den Stücken absorbiert wird und nicht mehr als 10 Gew.-% des Doseninhalts als dazwischenliegende(s) Flüssigkeit, Gel oder sonstiges Matrixmaterial übrig bleiben, so dass die Stücke von benachbarten Stücken getragen werden und sich in direktem Kontakt mit ihnen befinden.

2. Konserviertes Nahrungsmittel nach Anspruch 1, wobei die Stücke eine schwammartige Innenstruktur haben.

3. Konserviertes Nahrungsmittel nach einem der vorherigen Ansprüche, wobei wenigstens einige der Poren in den Stücken Flüssigkeit enthalten.

4. Konserviertes Tierfutter nach einem der vorherigen Ansprüche, das wenigstens von einer Gruppe von Katzen mit normaler Fütterungsvorliebe für konventionelle Katzennahrung gegenüber konventionellem Dosenfutter für Katzen bevorzugt wird.

5. Konserviertes Nahrungsmittel nach einem der vorherigen Ansprüche, wobei die Stücke ein aufgegangenes Nahrungsmittel sind, das ein geliertes Gemisch umfasst, das Fleischprotein beinhaltet.

6. Konserviertes Nahrungsmittel nach einem der vorherigen Ansprüche, wobei das gelierte Gemisch ferner Stärke umfasst.

7. Konserviertes Nahrungsmittel nach einem der vorherigen Ansprüche, wobei das gelierte Gemisch ferner Rückstände von einem aktivierten chemischen Treibmittel umfasst.

8. Konserviertes Nahrungsmittel nach einem der vorherigen Ansprüche, wobei das gelierte Gemisch wenigstens 5 Gew.-% Wasser umfasst.

9. Konserviertes Nahrungsmittel nach Anspruch 8, wobei das gelierte Gemisch wenigstens 30 Gew.-% Wasser umfasst.

10. Konserviertes Nahrungsmittel nach Anspruch 9, wobei das gelierte Gemisch wenigstens 60 Gew.-% Wasser umfasst.

11. Konserviertes Nahrungsmittel nach einem der vorherigen Ansprüche, wobei die Stücke zwischen 65 und 85 Gew.-%, vorzugsweise zwischen 70 und 80 Gew.-% Wasser umfassen.

12. Konserviertes Nahrungsmittel nach einem der vorherigen Ansprüche mit einer Oberflächenbeschaffenheit, die gekochtem Fleisch ähnelt.

13. Verfahren zur Herstellung eines Nahrungsmittels, umfassend die folgenden Schritte: Bilden eines Gemischs aus Fleischprotein und einem Geliersystem; Gehenlassen des Gemischs, während es geliert und zu Stücken geformt wird; Verschließen der gelierten Stücke in einem Behälter mit einer Flüssigkeit; und Erhitzen des Inhalts des Behälters, damit die Flüssigkeit von den Stücken absorbiert wird, so dass nicht mehr als 10 Gew.-% des Behälterinhalts als dazwischenliegende(s) Flüssigkeit, Gel oder sonstige Matrixmatrial übrig bleiben, so dass die Stücke von benachbarten Stücken getragen werden und sich in direktem Kontakt mit ihnen befinden.

14. Verfahren nach Anspruch 13, wobei das Gemisch durch Erhitzen geliert wird.

15. Verfahren nach Anspruch 13 oder 14, wobei das Geliersystem Stärke umfasst.

16. Verfahren nach Anspruch 13, 14 oder 15, das das Bilden eines Gemischs aus Fleischprotein, einem Geliersystem und einem chemischen Treibmittel und Gelieren des Gemischs umfasst, während das chemische Treibmittel aktiviert wird.

17. Verfahren nach Anspruch 16, wobei das chemische Treibmittel in einer Menge zwischen 0,1 und 1,5 Gew.-% an Fleischprotein zugegeben wird.

18. Verfahren nach Anspruch 17, wobei das chemische Treibmittel in einer Menge zwischen 0,3 und 0,8 Gew.-% an Fleischprotein zugegeben wird.

19. Verfahren nach Anspruch 16, 17 oder 18, wobei das chemische Treibmittel durch Erhitzen aktiviert wird.

20. Verfahren nach einem der Ansprüche 16 bis 19, wobei das chemische Treibmittel ein Hydrogencarbonat eines Alkalimetalls ist.

21. Verfahren nach Anspruch 20, wobei das Alkalimetall Kalium ist.

22. Verfahren nach einem der Ansprüche 16 bis 21, wobei das chemische Treibmittel durch eine Änderung des pH-Wertes aktiviert wird.

23. Verfahren nach Anspruch 22, wobei das chemische Treibmittel Calciumcarbonat ist.

24. Verfahren nach Anspruch 22 oder 23, wobei die Änderung des pH-Wertes durch eine langsam freigesetzte Säure erreicht wird, die dem Gemisch zugegeben wird.

## Revendications

1. Aliment en boîte comprenant des morceaux discrets d'un mélange gélifié comprenant de la protéine de viande, pas plus de 10% en poids du contenu de la boîte étant un liquide, gel ou autre matière matricielle intermédiaire, les morceaux étant supportés par et en contact direct avec des morceaux voisins, l'aliment en boîte pouvant être obtenu par un procédé comprenant :
la formation d'un mélange de protéine de viande et d'un système de gélification ;
le levage du mélange tout en le gélifiant et le formant en morceaux ;
le scellement des morceaux gélifiés dans une boîte avec un liquide ; et
le chauffage du contenu de la boîte de telle sorte que le liquide soit absorbé par les morceaux ne laissant pas plus de 10% en poids du contenu de la boîte comme liquide, gel ou autre matière matricielle intermédiaire de telle sorte que les morceaux soient supportés par et en contact direct avec des morceaux voisins.

2. Aliment en boîte selon la revendication 1, dans lequel les morceaux ont une texture interne spongieuse.

3. Aliment en boîte selon l'une quelconque des revendications précédentes, dans lequel au moins certains des pores dans les morceaux contiennent du liquide.

4. Aliment en boîte selon l'une quelconque des revendications précédentes, pour lequel au moins un groupe de chats ayant une préférence d'alimentation commune pour des aliments conventionnels pour chats montre une préférence par rapport aux aliments en boîtes conventionnels pour chats.

5. Aliment en boîte selon l'une quelconque des revendications précédentes, dans lequel les morceaux sont un aliment levé comprenant un mélange gélifié comprenant de la protéine de viande.

6. Aliment en boîte selon l'une quelconque des revendications précédentes, dans lequel le mélange gélifié comprend en outre de l'amidon.

7. Aliment en boîte selon l'une quelconque des revendications précédentes, dans lequel le mélange gélifié comprend en outre un résidu d'un agent levant chimique activé.

8. Aliment en boîte selon l'une quelconque des revendications précédentes, dans lequel le mélange gélifié comprend au moins 5% en poids d'eau.

9. Aliment en boîte selon la revendication 8, dans lequel le mélange gélifie comprend au moins 30% en poids d'eau.

10. Aliment en boîte selon la revendication 9, dans lequel le mélange gélifié comprend au moins 60% en poids d'eau.

11. Aliment en boîte selon l'une quelconque des revendications précédentes dans lequel les morceaux comprennent entre 65 et 85% ; de préférence entre 70 et 80%, en poids d'eau.

12. Aliment en boîte selon l'une quelconque des revendications précédentes, ayant une texture de surface ressemblant à de la viande cuite.

13. Procédé de réalisation d'un aliment comprenant : la formation d'un mélange de protéine de viande et d'un système de gélification ; le levage du mélange tout en le gélifiant et le formant en morceaux ; le scellement des morceaux gélifiés dans un récipient avec un liquide ; et le chauffage du contenu du récipient de telle sorte que le liquide soit absorbé par les morceaux ne laissant pas plus de 10% en poids du contenu du récipient comme liquide, gel ou autre matière matricielle intermédiaire de telle sorte que les morceaux soient supportés par et en contact direct avec des morceaux voisins.

14. Procédé selon la revendication 13, dans lequel le mélange est gélifié par chauffage.

15. Procédé selon la revendication 13 ou 14, dans lequel le système de gélification comprend de l'amidon.

16. Procédé selon la revendication 13, 14 ou 15, qui comprend la formation d'un mélange de protéine de viande, d'un système de gélification et d'un agent levant chimique, et la gélification du mélange tout en activant l'agent levant chimique.

17. Procédé selon la revendication 16, dans lequel l'agent levant chimique est ajouté en une quantité de 0,1% à 1,5% en poids de protéine de viande.

18. Procédé selon la revendication 17, dans lequel l'agent levant chimique est ajouté en une quantité de 0,3% à 0,8% en poids de protéine de viande.

19. Procédé selon la revendication 16, 17 ou 18, dans lequel l'agent levant chimique est activé par chauffage.

20. Procédé selon l'une quelconque des revendications 16 à 19, dans lequel l'agent levant chimique est un carbonate d'hydrogène d'un métal alcalin.

21. Procédé selon la revendication 20, dans lequel le métal alcalin est du potassium.

22. Procédé selon l'une quelconque des revendications 16 à 21, dans lequel l'agent levant chimique est activé par un changement de pH.

23. Procédé selon la revendication 22, dans lequel l'agent levant chimique est du carbonate de calcium.

24. Procédé selon la revendication 22 ou 23, dans lequel le changement de pH est effectué par un acide à libération retardée qui est ajouté au mélange.
